# EUROPÄISCHE PATENTANMELDUNG

(11) **EP 0 881 126 A2**
(43) Veröffentlichungstag der Anmeldung: **02.12.1998**
(21) Anmeldenummer: 98109502.9
(22) Anmeldetag: 26.05.1998
(51) Int. Cl.: B60R 13/10, G09F 21/04

(54) **Kennzeichnungsschild für Hubladebühnen/Ladebordwände**

(30) Priorität: 28.05.1997 DE 29709370 U
(71) Anmelder: Conrad, Mechthild, 57627 Hachenburg (DE); Strunk, Hans-Ullrich, 57627 Hachenburg (DE); Weber, Edgar, 57645 Nister (DE)
(72) Erfinder: Conrad, Mechthild, 57627 Hachenburg (DE); Strunk, Hans-Ullrich, 57627 Hachenburg (DE); Weber, Edgar, 57645 Nister (DE)

(57) **Zusammenfassung**

Solche Kennzeichnungen sind z.B. in Deutschland in der StVZO vorgeschrieben.
Die Kennzeichnungen müssen rückseitig an den Hubladebühnen angebracht werden, beim Herablassen der Ladebordwände senkrecht sein und dürfen nicht zerstört werden, wenn die Ladebordwand schließlich auf dem Boden aufliegt.
Aus diesem Grund bestehen die derzeitigen Kennzeichnungen aus einem Hochreflexgewebe, welches sich unter der herabgelassenen Ladebordwand in Falten legt.
Die Praxis hat gezeigt, daß diese Hochreflexgewebe sehr schnell zerstört werden bedingt durch den Fahrtwind und den mechanischen Abrieb bei herabgelassener Arbeitsbühne.

Die erfindungsgemäße Neuerung besteht aus einem Stahlblechschild, welches horizontal klappbar ausgeführt ist, über Scharniere (2) an der Ladebordwand befestigt wird und an dessem unteren Ende eine oder mehrere Gleitschienen (3) vorhanden sind.

Beim Herablassen der Ladebordwand stellt sich dieses Kennzeichnungsschild (1) zunächst senkrecht, klappt zusammen, sobald der Boden erreicht wird und verschwindet mittels der Gleitschienen (3) in dem Hohlraum, der bei völlig herabgelassener Ladebordwand zwischen Fahrbahn und Unterseite der Hubladebühne immer vorhanden ist.
Das teure Hochreflexgewebe wird vermieden und die Haltbarkeit dieser Ausführung ist wesentlich länger durch den Einsatz von Edelstahlmaterialien.

## Beschreibung

Die Kennzeichnung von Hubladebühnen ist z.B. für Deutschland in § 53b StVZO mit Wirkung vom 01.01.1993 geregelt. Gem. dieser Verordnung müssen Hubladebühnen durch nach hinten wirkende retroreflektierende rot-weiße Warnmarkierungen kenntlich gemacht sein. Hierbei sind die DIN 67520 Teil 2 und DIN 6171 Teil 1 sowie die TA Nr. 16a zu beachten.

Die Kennzeichnung von Hubladebühnen wird derzeit ausschließlich durch weiße, flexible Hochreflexgewebe ausgeführt, welche mit roten Streifen lasierend bedruckt sind. Diese Warnmarkierungen sind am oberen Ende in einer Wechselhalterung gehalten ( DE 92 05 365 U 1 und DE 93 04 000 U 1 ).

Da diese Warnmarkierungen hinten an Lastkraftwagen und Anhängern angebracht werden müssen, sind diese Warnmarkierungen den Witterungsbedingungen ausgesetzt und unterliegen starken Verwirbelungen sowie Sogeinflüssen beim Fahren mit höherer Geschwindigkeit, was die Haltbarkeit der Warnmarkierungen stark beeinträchtigt.

Darüberhinaus kann es beim Herunterlassen der Ladebordwände zu Beschädigungen an der Warnmarkierung kommen, da das Hochreflexgewebe sich unter der Ladebordwand in Falten legt. Diese Faltenbildung erfolgt völlig ungeordnet und wird dadurch erschwert, daß sämtliche Hersteller die Widerstandsfähigkeit des Hochreflexgewebes gegen Witterungseinflüße und Fahrtbedingungen (Verwirbelung, Sog) dadurch zu verbessern trachten, daß hinter das reflektierende Hochreflexgewebe eine Verstärkungsfolie angenäht wird, welche aus widerstandsfähigerem Material (PVC-Gewebe, Polyamidgewebe, Planenstoff) besteht, wodurch wiederum die Faltenbildung der Warnmarkierung unter der herabgelassenen Hubladebühne erschwert wird und die retroreflektierende Oberfläche des Hochreflexgewebes bei herabgelassener Hubladebühne Reibungsschäden durch den Kontakt mit der Fahrbahn und/oder der Hubladebühne erfährt. Hierdurch kommt es zu erheblichen Beschädigungen an der Warnmarkierung.

Befragungen von Anwendern der derzeitigen Hubladebühnenkennzeichnungen ergaben übereinstimmend, daß die Haltbarkeit der Warnmarkierungen aus Hochreflexgewebe nur 1 - 2 Jahre beträgt, bedingt durch die Verwirbelungen am Fahrzeug und die Beschädigungen bei herabgelassener Hubladebühne.

Dies verursacht in Anbetracht des hohen Stückpreises einer solchen Warnmarkierung erhebliche Kosten in der Fahrzeugunterhaltung.

Der im Patentanspruch 1 angegebenen Erfindung liegt das Problem zugrunde, eine Kennzeichnung für Hubladebühnen zu schaffen, welche aus widerstandsfähigem Material gearbeitet ist, ohne Beschädigungen eine genau vorgegebene Position bei heruntergelassener Ladebordwand einnimmt und kostengünstiger ist durch niedrigere Herstellungskosten und eine höhere Lebensdauer.

Dieses Problem wird mit den im Patentanspruch 1 aufgeführten Merkmalen gelöst.
Das erfindungsgemäße Kennzeichnungsschild ist steif ausgebildet über eine Schildplatte aus widerstandfähigem Material, vorzugsweise Blech, und vorderseitig nur mit einer preisgünstigen, handelsüblichen reflektierenden Folie beschichtet anstelle des teuren Hochreflexgewebes.

Das Schild ist über oben angebrachten Scharniere stabil mit der Ladebordwand verbunden und hält Verwirbelungen und Sogeinwirkungen bei höherer Fahrgeschwindigkeit problemlos stand.

Beim Herunterlassen der Ladebordwand stellt sich das Kennzeichnungsschild senkrecht und fixiert seine Lage in dem Moment, in welchem unten am Schild angebrachte, bewegliche Gleitschienen auf die Fahrbahn treffen und sich dort verkrallen. Durch die Voreinstellung des horizontal klappbaren Schildes in einen leicht geklappten Zustand über einen rückseitig angebrachten Winkel ist nunmehr die Bewegungsrichtung beim weiteren Herablassen der Hubladebühne vorgegeben. Die Scharniere, welche die beiden Schildhälften zusammenhalten, bewegen sich zum Fahrzeug hin und drücken hierdurch die Gleitschienen in voller Fläche auf die Fahrbahn. Kurz bevor das Kennzeichnungsschild vollständig zusammenklappt, d.h., die Hubladebühne auf der Fahrbahn aufsetzt, lösen sich die Krallen, bedingt durch eine Abwinklung in den Gleitschienen und das Schild gleitet unter die Ladebordwand in den dort befindlichen Hohlraum und positioniert sich so, daß der Befestigungspunkt des Schildes an der Hubladebühne in der gleichen vertikalen Achse liegt, wie die Unterkante des Schildes. Die Gleitschienen sind hierbei so bemessen, daß die gesamte Schildkonstruktion unbeschädigt in den Hohlraum unterhalb der Hubladebühne verbracht werden kann.
Auch bei unebenen Fahrbahnen, z.B. Verbundpflaster, zeigt sich die Vorteilhaftigkeit der Erfindung, da die Gleitschienen erfahrungsgemäß auch größere Unebenheiten überdecken und somit selbst bei schadhaften Untergründen und sogar bei Abwassereinlaufgittern für eine geordnete, beschädigungsfreie Einbettung des Kennzeichnungsschildes sorgt.

Eine vorteilhafte Ausgestaltung der Erfindung ist auch darin zu sehen, daS die teure retroreflektierende Vorderseitenbeschichtung durch das Zusammenklappen des Schildes besonders geschützt wird.

Ein Ausführungsbeispiel der Erfindung wird anhand der Figur 1 bis 4 erläutert. Es zeigen:
- Figur 1:: die Rückseite eines Fahrzeuges mit angebrachten Warnmarkierungen/Kennzeichnungsschildern für Hubladebühnen.
- Figur 2:: die seitliche Ansicht des Fahrzeuges mit angebrachtem Kennzeichnungsschild.
- Figur 3:: das Abklappen des Kennzeichnungsschildes beim Herunterfahren der Ladebordwand.
- Figur 4:: die Endlage des zusammengeklappten Kennzeichnungsschildes unter der Hubladebühne.

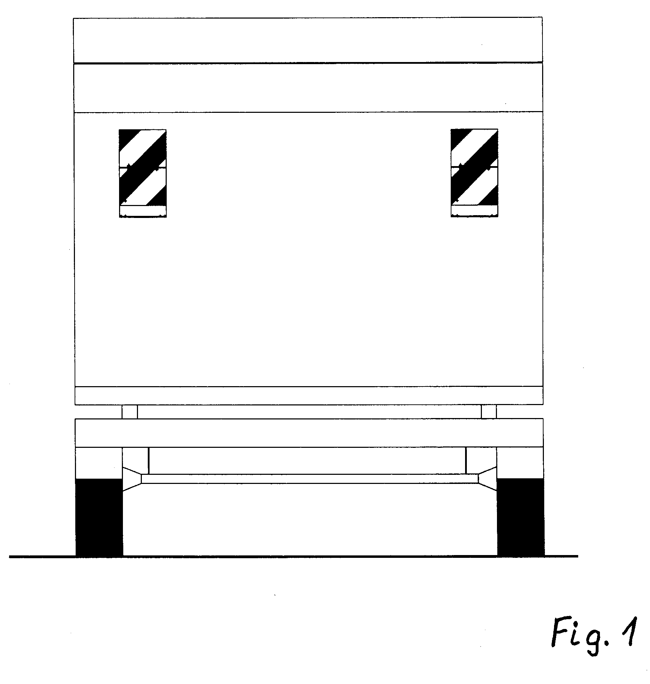

In Figur 1 ist die Vorderseite des Kennzeichnungsschildes zu sehen und seine Anbringung am Fahrzeug.

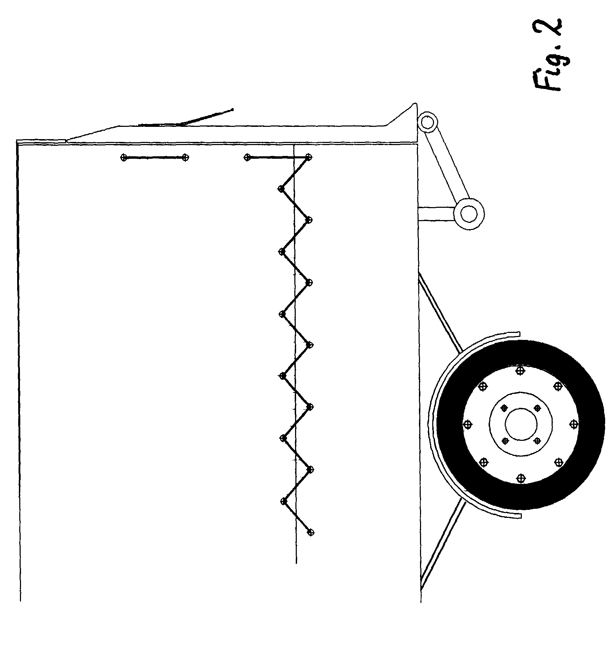

Figur 2 zeigt hierzu die entsprechende Seitenansicht des Kennzeichnungsschildes mit der Gleitschiene.

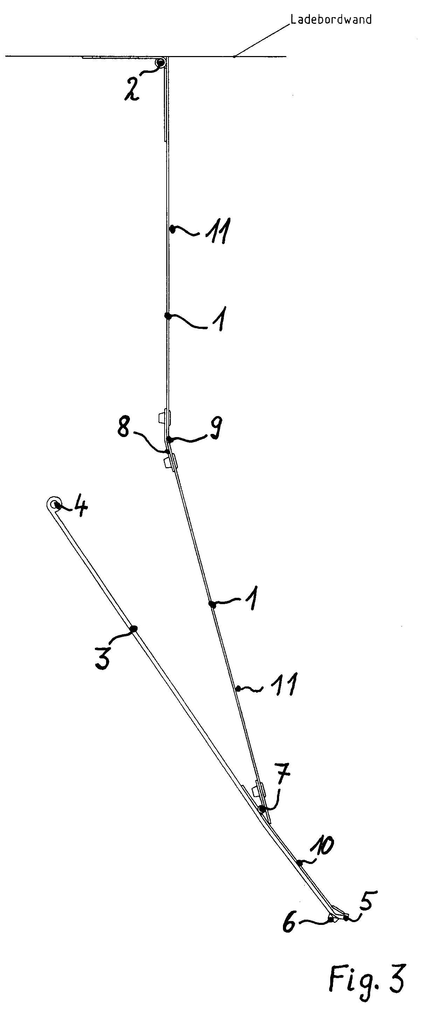

In Figur 3 ist das Kennzeichnungsschild (1) während des Herunterfahrens der Ladebordwand/Hubladebühne dargestellt. Die pendelnde Befestigung des Kennzeichnungsschildes (1) an der Ladebordwand über das oben angebrachte Scharnier (2) ergibt eine bestimmte Schrägstellung der Gleitschiene (3), welche gebildet wird durch die Voreinstellung der unteren Schildhälfte (1) über den rückseitig an der oberen Schildhälfte (1) befestigten Winkel (8), das Befestigungsscharnier (7) der Gleitschiene (3) und den Kontakt der Gleitschiene (3) mit der unteren Kante des Kennzeichnungsschildes (1), welcher durch das Eigengewicht der Gleitschiene (3) erfolgt. Man erkennt, daß die Krallen (6), welche sich an der vorderen Abkantung (5) der über das Kennzeichnungsschild (1) hinausragenden Gleitschiene (3) befinden als erste Kontakt mit der Fahrbahn aufnehmen werden und somit dem Kennzeichnungsschild (1) in den Scharnieren (9) eine bestimmte Bewegungsrichtung aufzwingen.
Während das obere Scharnier (2), mit welchem das Kennzeichnungsschild (1) an der Ladebordwand befestigt ist, senkrecht nach unten fährt, bewegt sich das Scharnier (9), welches die beiden Schildhälften (1) zusammenhält nach links und nach unten. Hierdurch wird das Schild (1) beim weiteren Herunterfahren der Ladebordwand zusammengeklappt. Die Gleitschiene (3) liegt bei diesem Vorgang irgendwann flächig auf dem Boden auf.

In diesem Moment lösen sich die Krallen (6) aus dem Untergrund, da die Gleitschiene (3) rechts von ihrem Befestigungsscharnier (7) um ca. 5 Grad nach oben gekantet ist. Bevor die Hubladebühne auf die Fahrbahn trifft, ist das Kennzeichnungsschild (1) fast vollständig zusammengeklappt, sodaß nur noch eine äußerst geringe Gewichtskraft auf der Gleitschiene (3) lastet. Das Kennzeichnungsschild (1) verfährt nun über die Gleitschienen (3) in seine Endlage, dergestalt, daß die obere Kante des Kennzeichnungsschildes (1) und die untere Kante des Kennzeichnungsschildes (1) im zusammengeklappten Zustand in vertikaler Position übereinstimmen müssen, bedingt durch die Einwirkung der Scharniere (9) zum Klappen der beiden Schildhälften (1) und die Befestigungsscharniere (2), mit welchen das Kennzeichnungsschild (1) an der Ladebordwand befestigt ist.
Zur Aussteifung der gesamten Schildkonstruktion ist eine Abdecklasche (10) vorhanden, welche die Gleitschienen verbindet und darüberhinaus zu Werbezwecken genutzt werden kann.

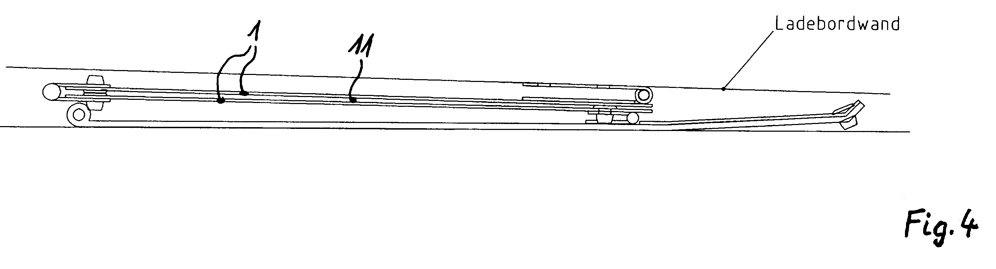

In Figur 4 ist die Endlage des Kennzeichnungsschildes (1) unter der Hubladebühne dargestellt. Man erkennt, daß die vorderseitige retroreflektierende Beschichtung (11) vollständig geschützt im Inneren des zusammengeklappten Kennzeichnungsschildes (1) liegt und daS das Kennzeichnungsschild (1) beschädigungsfrei in den Hohlraum zwischen heruntergelassener Ladebordwand und Fahrbahn eingebettet ist.

## Patentansprüche

1. Horizontal klappbares Schild (1) aus widerstandsfähigem Material zur Kennzeichnung von Hubladebühnen/Ladebordwänden mit vorderseitiger retroreflektierender Beschichtung (11),
dadurch gekennzeichnet,
daß am oberen Ende ein oder mehrere rückseitig angebrachte Scharniere (2) vorhanden sind und daß am unteren Ende des Schildes (1) rückseitig über ein oder mehrere Scharniere (7) Gleitschienen (3) angebracht sind.

2. Kennzeichnungsschild nach Patentanspruch 1,
dadurch gekennzeichnet,
daß diese Gleitschienen (3) aus Edelstahlstreifen bestehen, welche an dem Ende, welches sich auf der Schildrückseite befindet, gerollt (4) sind bei einem Außendurchmesser von ca. 8 - 12 mm und das andere Ende dieser Streifen ca. 50 - 70 mm über die untere Schildkante (1) hinausragt.

3. Kennzeichnungsschild nach Patentanspruch 1,
dadurch gekennzeichnet,
daß die Länge des Gleitschienen (3) so bemessen ist, daß der äußere Radius der Rolle (4) am Ende der Gleitschiene (3) mit dem Kennzeichnungsschild (1) abschließt, wenn dieses Kennzeichnungsschild (1) zusammengeklappt ist und die Gleitschiene (3) unter dem Schild (1) liegt.

4. Kennzeichnungsschild nach Patentanspruch 1,
dadurch gekennzeichnet,
daß die Gleitschiene (3) rechts vom Befestigungsscharnier (7) in einem Winkel von ca. 5 Grad nach oben gekantet ist und darüberhinaus an dem Ende, welches über das Kennzeichnungsschild (1) hinausragt, eine Aufkantung (5) von ca. 5 - 10 mm Höhe hat, welche einen Innenwinkel von ca. 120 - 150 Grad einschließt.

5. Kennzeichnungsschild nach Patentanspruch 1,
dadurch gekennzeichnet,
daß die Gleitschiene (3) im Abknickpunkt der Aufkantung (5) an ihrer Unterseite eine oder mehrere Krallen (6) besitzt.

6. Kennzeichnungsschild nach Patentanspruch 1,
dadurch gekennzeichnet,
daß bei mehreren Gleitschienen (3) der über die untere Schildkante (1) hinausragende Teil der Gleitschienen (3) durch ein aufgesetztes abgewinkeltes Blech (10) abgedeckt ist, welches über die gesamte Schildbreite läuft und mit den Gleitschienen (3) dauerhaft und widerstandsfähig verbunden ist.

7. Kennzeichnungsschild nach Patentanspruch 1,
dadurch gekennzeichnet,
daß der Klappmechanismus des Kennzeichnungsschildes (1), welcher im Regelfall über ein oder mehrere Scharniere (9) gebildet wird, voreingestellt ist durch einen Winkel (8), der rückseitig horizontal an der oberen Schildhälfte (1) dauerhaft und widerstandsfähig befestigt ist und die untere Schildhälfte (1) so abklappt, daS die beiden Schildhälften (1) an der Vorderseite einen eingeschlossenen Winkel bilden von ca. 160 - 175 Grad.
